# EUROPEAN PATENT APPLICATION

(11) **EP 4 134 383 A1**
(43) Date of publication of application: **15.02.2023**
(21) Application number: 21796320.6
(22) Date of filing: 26.04.2021
(51) Int. Cl.: C08F 4/654, C08F 10/00

(54) **CATALYST COMPONENT FOR OLEFIN POLYMERIZATION OR COPOLYMERIZATION AND PREPARATION METHOD THEREFOR, AND APPLICATION**

(30) Priority: 28.04.2020 CN 202010352921
(71) Applicant: China Petroleum & Chemical Corporation, Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: CUI, Nannan, Beijing 100013 (CN); GUO, Zifang, Beijing 100013 (CN); GOU, Qingqiang, Beijing 100013 (CN); LI, Bingyi, Beijing 100013 (CN); WANG, Ruen, Beijing 100013 (CN); LI, Yan, Beijing 100013 (CN); FU, Jie, Beijing 100013 (CN); YAN, Lixin, Beijing 100013 (CN); AN, Jingyan, Beijing 100013 (CN); KOU, Peng, Beijing 100013 (CN); XU, Shiyuan, Beijing 100013 (CN); ZHANG, Tongxuan, Beijing 100013 (CN)
(74) Representative: Hoffmann Eitle
(86) International application number: PCT/CN2021/089891
(87) International publication number: WO 2021/218913

(57) **Abstract**

The present disclosure relates to olefin polymerization catalysts, and discloses a catalyst component for olefin polymerization or copolymerization and a preparation method therefor, and a catalyst and an application thereof. The catalyst component for olefin polymerization or copolymerization in the present disclosure comprises titanium element, magnesium element, an electron donor, an organic silicon polymer, and an inorganic oxide support, wherein the molecular composition of the organic silicon polymer is [RₓSiO_{(4-x)/2}]ₘ, wherein R is selected from alkyl, aryl, vinyl or oxygen, x is 0 or more and 2 or less, and the value of m makes the number-average molecular weight of the organic silicon polymer be 1×10³-1×10⁶ g/mol. The catalyst has the characteristics of high activity, good hydrogen-regulating copolymerization performance, high bulk density of resulting polymer powder, and a low content of fine powder in the polymer powder when applied to olefin polymerization, particularly to ethylene and α-olefin polymerization.

## Description

### FIELD

The present disclosure relates to olefin polymerization catalysts, in particular to a catalyst component for olefin polymerization or copolymerization, a preparation method therefor, and a catalyst and an application thereof.

### BACKGROUND

It is well known that an efficient Ziegler-Natta catalyst for olefin polymerization consists of a primary catalyst and promoters. The primary catalyst is a compound of a transition metal element in the fourth to eighth main groups in the periodic table of elements, while the promoters are organic compounds of metal elements in the first to third main groups in the periodic table of elements. Usually, the primary catalyst may be divided into two parts: an inert support and an active component supported by the inert support. The main catalyst is usually prepared by reactive molding of a titanium halide and a magnesium halide having lattice defects, or by supporting the reactants on an inert support. The magnesium compound is preferably a magnesium halide with lattice defects, which may be produced from a magnesium compound, or may be obtained by reacting an electron donor such as alcohol, ether, or ester, etc. to react with a magnesium halide and then removing a part of the electron donor such as alcohol, ether, or ester, etc.

In olefin polymerization, the performance of the catalyst affects the performance of the polymer. The catalyst shall have high polymerization activity, high hydrogen regulation performance and high copolymerization performance; in addition, in a vapor phase polymerization process, using a polymer in the form of fine powder is adverse to the polymerization process, because the fine powder of the polymer leads to problems related with fluidized bed control and circulating gas entrainment, consequently results in equipment failure, compromised operability, and degraded efficiency. Therefore, it is desirable to minimize the amount of the fine powder of the polymer in the olefin polymerization process. A factor for reducing the fine powder of the polymer is to eliminate or reduce the precursory catalyst particles that produced the fine powder of the polymer. The fine powder of the polymer is mainly derived from the fine particles in the catalyst, the hollow catalyst particles that are broken in the collision process in the fluidized bed owing to their poor strength, and the catalyst that is broken in the polymerization process owing to excessively quick activity releasing. It is also desirable to make the polymer powder have higher bulk density in the polymerization process. Using polymer powder with appropriately high bulk density makes the control of the fluidized bed more stable and is conductive to the production in the reactor under a high load.

A spray drying process is an effective process for preparing an efficient Ziegler-Natta catalyst for olefin polymerization. In that process, a solution or suspension is sprayed through a specially designed nozzle by means of a gas into a gas drying chamber with thermal inertia for drying, and the dispersed atomized droplets are dried into powder or a granular product. Once the droplets come into contact with a dry carrier gas, evaporation is carried out on the saturated vapor films rapidly formed on the surfaces of the droplets. During the evaporation, the size distribution of the droplets varies, and different products exhibit different characteristics. In the evaporation process, the droplets tend to expand, collapse, break or split, resulting in porous and irregular shapes, depending on the characteristics of the liquid droplets formed in the spraying process. The structural transformation of the particles may be affected by changing the composition, volume and dimensions of the droplets. Greater, smaller or aggregated particles can be obtained by adjusting the conditions of the spray drying process.

The Chinese Patent Application No. CN1993391A has disclosed a robust spray-dryied Ziegler-Natta catalyst composition, comprising a mixture or reaction product of an inert porous filler, a magnesium halide, a solvent or diluent, a Lewis base electron donor compound, and a transition metal compound, wherein the magnesium halide compound is present in an amount that is at least 90 percent of the saturation concentration in the solvent or diluent, the catalyst particles obtained through spray drying have an average size (D₅₀) of from 10 to 70 µm, wherein at least 5 percent of particles having substantial internal void volume and a substantially monolithic surface layer (shell) characterized by an average shell thickness/particle size ratio (Thickness Ratio) determined by SEM techniques for particles having particle size greater than 30 µm of greater than 0.2. The polymer particles can be reduced by reducing broken catalyst particles or using catalyst particles that are still great after they are broken.

The Chinese Patent Application No. CN1668654A has disclosed a spray-dried polymerization catalyst and a polymerization method using the polymerization catalyst. The catalyst comprising a spray-dried composition of an inert filler and a reaction product of a magnesium halide, a solvent, an electron donor compound, and a transition metal compound. The catalyst contains an alcohol compound as an electron donor, and uses a spherical inert porous filler having an average particle size ranging from 1 µm to 12 µm to reduce small particles in the catalyst and thereby reduce the content of the particles in the polymer.

The Chinese Patent Application No. CN1802391Ahas disclosed a catalyst for ethylene polymerization, which is prepared through a spray drying process. The catalyst has high activity, but still tends to break severely and consequently results in an increased content of fine powder in vapor phase polymerization.

The above-mentioned catalysts are still not ideal, although some of them can improve the performance of olefin polymerization catalysts in one aspect and the others of them can improve the performance of olefin polymerization catalysts in several aspects. Therefore, it is necessary to develop a catalyst that has more comprehensively improved performance parameters and can improve the performance parameters of the polymer powder more comprehensively.

### SUMMARY

To solve the problems existing in the prior art, the present disclosure provides a catalyst component for olefin polymerization or copolymerization, a preparation method therefor and application thereof. The catalyst has the characteristics of high activity, good hydrogen-regulating copolymerization performance, high bulk density of resulting polymer powder, and low content of fine powder in the polymer powder when the catalyst is applied to olefin polymerization, particularly to ethylene and α-olefin polymerization.

According to a first aspect of the present disclosure, the present disclosure provides a catalyst component for olefin polymerization or copolymerization, comprising titanium element, magnesium element, an electron donor, an organic silicon polymer, and an inorganic oxide support, wherein the molecular composition of the organic silicon polymer is [RₓSiO_{(4-x)/2}]ₘ, wherein R is selected from alkyl, aryl, alkenyl or hydrogen, x is 0 or more and 2 or less, and the value of m makes the number-average molecular weight of the organic silicon polymer be 1 × 10³-1 × 10⁶ g/mol.

Preferably, x is 1-2.

Preferably, R is selected from C₁-C₆ alkyl, C₆-C₉ aryl, C₁-C₆ alkenyl or hydrogen; more preferably, R is selected from methyl, ethyl, propyl, phenyl, vinyl or hydrogen.

Preferably, the organic silicon polymer has a reticular structure or linear structure.

Preferably, the number-average molecular weight of the organic silicon polymer having a reticular structure is 2×10³-1 ×10⁶ g/mol, and the molecular weight distribution of the organic silicon polymer is 1-9.

Preferably, the number-average molecular weight of the organic silicon polymer having a linear structure is 1×10³-1 ×10⁵ g/mol, and the molecular weight distribution of the organic silicon polymer is 1-8.

Preferably, the organic silicon polymer is obtained through hydrolysis of one or more monomer(s) represented by a general formula RₓSiCl(₄₋ₓ), wherein R is selected from alkyl, aryl, vinyl or hydrogen, x is an integer within a range of 0-3, and a molar ratio of R/Si of the monomers is 2 or less.

Preferably, the titanium element is derived from a titanium-containing compound.

Preferably, the titanium-containing compound is at least one selected from titanium halide, a product of titanium halide reduction with aluminum, and a product of titanium halide reduction with magnesium.

Preferably, the titanium halide is selected from titanium bromide and/or titanium chloride.

Preferably, the general formula of the product of titanium halide reduction with aluminum is TiXₘ·nAlXₚ, wherein 0 < n ≤ 1, 0 < m ≤ 3, 0 < p ≤ 3, and X is halogen.

Preferably, the general formula of the product of titanium halide reduction with magnesium is TiXₘ·qMgXᵣ, wherein 0 < q ≤ 1, 0 < m ≤ 3, 0 < r ≤ 3, and X is halogen.

Preferably, the magnesium element is derived from magnesium halide.

Preferably, the magnesium halide is at least one selected from magnesium fluoride, magnesium chloride, magnesium bromide and magnesium iodide.

Preferably, the magnesium halide is magnesium chloride.

Preferably, the electron donor is at least one selected from ester compounds, ether compounds and ketone compounds; more preferably, the electron donor is at least one selected from alkyl esters of C₁-C₄ saturated aliphatic carboxylic acids, alkyl esters of C₇-C₈ aromatic carboxylic acids, C₂-C₆ aliphatic ethers, C₃-C₄ cyclic ethers and C₃-C₆ saturated aliphatic ketones; further preferably, the electron donor is at least one selected from methyl formate, ethyl formate, isopropyl formate, n-propyl formate, methyl acetate, ethyl acetate, n-propyl acetate, isopropyl acetate, n-butyl acetate, isobutyl acetate, ethyl ether, propyl ether, hexyl ether, tetrahydrofuran, acetone and methyl isobutyl ketone.

Preferably, the inorganic oxide support is selected from silicon oxides and/or aluminum oxides, more preferably is silicon dioxide.

Preferably, the particle size of the inorganic oxide support is 0.01-10 µm, more preferably is 0.01-5 µm, further preferably is 0.1-1 µm.

Preferably, a weight ratio of the inorganic oxide support to the organic silicon polymer is (1 -100): 1, more preferably is (2-80):1.

Preferably, based on total weight 100 wt%, the catalyst component comprises:
0.1-5 wt% of titanium, measured in titanium element;
0.2-10.2 wt% of magnesium, measured in magnesium element;
15-40 wt% of electron donor;
0.01-15 wt% of organic silicon polymer; and
1-70 wt% of inorganic oxide support.

More preferably, based on total weight 100 wt%, the catalyst component comprises:
0.5-4 wt% of titanium, measured in titanium element;
4-8 wt% of magnesium, measured in magnesium element;
20-35 wt% of electron donor;
0.1-10 wt% of organic silicon polymer; and
10-60 wt% of inorganic oxide support.

Accord to a second aspect of the present disclosure, the present disclosure provides a method for preparing the catalyst component in the present disclosure, which comprises the following steps:
step 1: mixing raw materials, comprising a titanium-containing compound, a magnesium halide, an electron donor, an organic silicon polymer and an inorganic oxide support, to obtain a slurry suspension;
step 2: carrying out spray drying, to obtain the catalyst component.

Preferably, in the step 1, the titanium-containing compound, the magnesium halide and the electron donor are mixed first, to obtain a mother solution; the inorganic oxide support and the organic silicon polymer is added during or after the preparation process of the mother solution, to obtain the slurry suspension.

Preferably, a molar ratio of the electron donor to the magnesium halide is (5.0-50): 1, a mass ratio of the organic silicon polymer to the magnesium halide is (0.01-1.0):1, a molar ratio of the titanium-containing compound to the magnesium halide is (0.1-1.0):1, and a molar ratio of the inorganic oxide to the magnesium halide is (1.0-5.0):1.

Preferably, the mixing in the step 1 is carried out at a temperature within a range of normal temperature to 85°C for 0.1 h or more, wherein the normal temperature is 25±5°C.

Preferably, in the step 2, the spray drying is carried out under the following conditions: inlet temperature of 100-240°C and outlet temperature of 60-130°C.

According to a third aspect of the present disclosure, the present disclosure provides a catalyst for olefin polymerization or copolymerization, comprising:
(A) the catalyst component of the present disclosure or a catalyst component obtained with the preparation method of the present disclosure; and
(B) an organo-aluminum compound represented by a general formula A1R_{b}X'_{3-b}, wherein R is hydrogen or C₁-C₂₀ alkyl; X' is halogen; and 0 < b ≤ 3.

The halogen preferably is chlorine, bromine or iodine.

The value of b preferably meets 1 < b ≤ 3.

Preferably, the organo-aluminum compound is at least one selected from triethylaluminum, triisobutyl aluminum, tri-n-hexyl aluminum, tri-n-octyl aluminum and diethylaluminum chloride.

Preferably, a molar ratio of the organo-aluminum compound to the catalyst component is (5-1,000):1, more preferably is (10-200): 1.

According to a fourth aspect of the present disclosure, an application of the catalyst of the present disclosure in olefin polymerization is provided.

Preferably, an application of the catalyst of the present disclosure in ethylene homopolymerization or copolymerization is provided.

With the above technical scheme, the present disclosure can provide a catalyst component for olefin polymerization or copolymerization, a preparation method therefor and an application thereof. The catalyst has the characteristics of high activity, good hydrogen-regulating copolymerization performance, high bulk density of resulting polymer powder, and a low content of fine powder in the polymer powder when the catalyst is applied to olefin polymerization, particularly to ethylene and α-olefin polymerization.

In addition, compared with the prior art, the present disclosure attains the following beneficial effects: in the catalyst for olefin polymerization or copolymerization in the present disclosure, an electron donor is employed to dissolve a magnesium halide and a titanium-containing compound, an organic silicon polymer and an inorganic oxide support are used as filler to prepare a slurry suspension, and a spray drying process is used for molding. The catalyst has less fine particles, and is used to catalyze ethylene polymerization. The catalyst has high activity and high hydrogen regulation performance, and the resulting polymer powder has high bulk density and low content of fine powder.

### DETAILED DESCRIPTION

The end points and any value in the ranges disclosed in the present disclosure are not limited to the exact ranges or values; instead, those ranges or values shall be understood as encompassing values that are close to those ranges or values. For numeric ranges, combinations may be made between the end points of the ranges, between the end points of the ranges and the discrete point values, and between the discrete point values to obtain one or more new numeric ranges, which shall be deemed as having been disclosed specifically herein.

According to a first aspect of the present disclosure, the present disclosure provides a catalyst component for olefin polymerization or copolymerization, comprising titanium element, magnesium element, an electron donor, an organic silicon polymer, and an inorganic oxide support, wherein the molecular composition of the organic silicon polymer is [RₓSiO_{(4-x)/2}]ₘ, wherein R is selected from alkyl, aryl, vinyl or hydrogen, x is 0 or more and 2 or less, and the value of m makes the number-average molecular weight of the organic silicon polymer be 1×10³-1×10⁶ g/mol.

According to the present disclosure, the alkyl preferably is C₁-C₆ alkyl, more preferably is C₁-C₃ alkyl, further preferably is methyl, ethyl, propyl, butyl, amyl or hexyl, still further preferably is methyl or ethyl, particularly preferably is methyl.

The aryl preferably is C₆-C₉ aryl, more preferably is phenyl or C₆-C₉ phenyl having substituents, further preferably is phenyl or C₆-C₇ phenyl having substituents, particularly preferably is phenyl.

The substituent may be, for example, methyl, ethyl or propyl, preferably is methyl or ethyl, particularly preferably is methyl.

In addition, in the case that there are pluralities of R substituents, and they may be the same or different, preferably are the same.

In a preferred embodiment of the present disclosure, R is selected from methyl, ethyl, propyl, phenyl, vinyl or hydrogen.

In another preferred embodiment of the present disclosure, R is selected from methyl and phenyl.

The value of x may be 0.1, 0.2, 0.5, 1, 1.1, 1.2, 1.3, 1.4, 1.5, 1.6, 1.8 or 2, for example.

According to the present disclosure, preferably, x is 1-2.

According to the present disclosure, preferably, the value of m makes the number-average molecular weight of the organic silicon polymer be 2×10³-1×10⁶ g/mol; more preferably, the value of m makes the number-average molecular weight of the organic silicon polymer be 5×10³-1×10⁶ g/mol; further preferably, the value of m makes the number-average molecular weight of the organic silicon polymer be 5×10⁴-1×10⁶ g/mol; particularly preferably, the value of m makes the number-average molecular weight of the organic silicon polymer be 2×10⁵-5×10⁵ g/mol.

According to the present disclosure, preferably, the organic silicon polymer has a reticular structure or linear structure; more preferably, the organic silicon polymer has a reticular structure.

The number-average molecular weight of the organic silicon polymer having a reticular structure may be 1 × 10³-1 × 10⁶ g/mol, and the molecular weight distribution may be 1-10; preferably, the number-average molecular weight of the organic silicon polymer having a reticular structure is 2×10³-1×10⁶ g/mol, and the molecular weight distribution is 1-9.

The number-average molecular weight of the organic silicon polymer having a linear structure may be 1×10³-1×10⁶ g/mol, and the molecular weight distribution may be 1-10; preferably, the number-average molecular weight of the organic silicon polymer having a linear structure is 1×10³-1×10⁵ g/mol, and the molecular weight distribution is 1-8.

In a particularly preferred embodiment of the present disclosure, the organic silicon polymer is an organic silicon polymer having a reticular structure, and the number-average molecular weight of the organic silicon polymer having a reticular structure is 2×10⁵-5×10⁵ g/mol, and the molecular weight distribution may be 2-3.

According to the present disclosure, the organic silicon polymer may be obtained through hydrolysis of one or more monomer(s) represented by a general formula R_{y}SiCl_{(4-y)}, wherein R is selected from alkyl, aryl, vinyl or hydrogen, y is an integer within a range of 0-3, and a molar ratio of R/Si of the monomer(s) is 2 or less. In the case that there are pluralities of R substituents, and they may be the same or different, preferably are the same.

The value of y may be 1, 2 or 3, for example.

In the present disclosure, "a molar ratio of R/Si of the monomers (hereinafter simply referred to as r/s)" refers to a ratio of the total number of R substituents to the total number of Si atoms.

In the present disclosure, if the molar ratio of R/Si of the monomers is greater than 2, the hydrolysis product of the one or more monomer(s) is an organic silicon polymer with low molecular weight (low polymer); if the molar ratio of R/Si of the monomers is smaller than 2, the hydrolysis product of the one or more monomer(s) is an organic silicon polymer having a reticular structure; if the molar ratio of R/Si of the monomers is equal to 2, the hydrolysis product of the one or more monomer(s) is an organic silicon polymer having a linear structure.

In a preferred embodiment of the present disclosure, the organic silicon polymer employs R₂SiCl₂ as the monomer, the value of r/s is equal to 2, the hydrolysis product of the monomer is an organic silicon polymer having a linear structure with a number-average molecular weight of 2×10³-1×10⁵ g/mol, and a molecular weight distribution of 1-1.5.

In another preferred embodiment of the present disclosure, the organic silicon polymer employs a mixture of R₂SiCl₂ and RSiCl₃ as the monomers, the value of r/s is smaller than 2, the co-hydrolysis product of the mixed monomers is an organic silicon polymer having a reticular structure with a number-average molecular weight of 2×10⁵-5×10⁵ g/mol, and a molecular weight distribution of 2-3.

The inventor has found through in-depth research: compared with the case that the molar ratio of R/Si is greater than 2, in the case that the molar ratio of R/Si is 2 or less, the polymerization activity of the catalyst and the bulk density and melt index of the polymer are higher, while the content of fine powder (<75 µm) in the polymer is lower. That is to say, in the case that the organic silicon polymer has a reticular structure or linear structure, the catalytic properties of the catalyst, such as the polymerization activity of the catalyst, the bulk density and melt index of the polymer, and the content of fine powder in the polymer, etc., are superior to those that the organic silicon polymer is an organic silicon polymer with low molecular weight.

It is speculated that the reason may be: owing to the fact that an organic silicon polymer with a molar ratio of R/Si greater than 2 usually is silicone oil, which is a heat conducting medium that has high heat capacity and is stable at high temperatures, the organic silicon polymer can inhibit the expansion, collapse, breaking or splitting of the droplets in the spray-drying evaporation process, and thereby can inhibit the generation of porous fine catalyst particles in irregular shapes. However, the organic silicon polymer with a molar ratio of R/Si is 2 or less in the present disclosure usually is silicone resin and silicone rubber. The organic silicon polymer not only can inhibit the expansion, collapse, breaking or splitting of the droplets in the spray-drying evaporation process and thereby inhibit the generation of porous fine catalyst particles in irregular shapes, but also can be used as a binder dispersed uniformly in the catalyst, so that the inorganic oxide support in the catalyst aggregates more tightly, thereby the strength of the catalyst particles is improved, the breaking of the catalyst in the polymerization process is inhibited, the content of fine powder in the polymer is decreased, and the bulk density of the polymer is increased. Moreover, the strength of the catalyst also has influence on the activity of the catalyst. Specifically, if the strength of the catalyst particles is too high, the active sites inside the catalyst particles can't be exposed easily, and the catalyst activity is inhibited; if the strength of the catalyst particles is too low, the particles tend to break, the activity is increased, the content of fine powder in the polymer is excessively high, and the morphology of the polymer is compromised.

According to the present disclosure, the amount of the organic silicon polymer may be selected appropriately according to the amount of the inorganic oxide support. Preferably, the weight ratio of the inorganic oxide support to the organic silicon polymer is (1-100):1, more preferably is (2-80):1, further preferably is (5-65):1.

In the present disclosure, the organic silicon polymer as a binder can effectively enhance the cohesion of the inorganic oxide support and increase the strength of the catalyst support. With respect to the inorganic oxide support, if the amount of the organic silicon polymer is too low, the organic silicon polymer can't achieve effective cohesion and has little influence on the strength of the catalyst support; if the amount of the organic silicon polymer is too high, the content of the inorganic oxide support that plays a role of skeleton and support is decreased, and it is difficult to improve the strength of the catalyst support.

According to the present disclosure, preferably, the titanium element is derived from a titanium-containing compound; more preferably, the titanium-containing compound is at least one selected from titanium halide, a product of titanium halide reduction with aluminum, and a product of titanium halide reduction with magnesium.

Preferably, the general formula of the product of titanium halide reduction with aluminum is TiXₘ·nAlXₚ, wherein 0 < n ≤ 1, 0 < m ≤ 3, 0 < p ≤ 3, and X is halogen; the general formula of the product of titanium halide reduction with magnesium is TiXₘ·qMgXᵣ, wherein 0 < q ≤ 1, 0 < m ≤ 3, 0 < r ≤ 3, and X is halogen.

The titanium halide preferably is selected from titanium bromide and/or titanium chloride, more preferably is at least one selected from titanium tribromide, titanium tetrabromide, titanium trichloride and titanium tetrachloride, further preferably is selected from titanium trichloride and/or titanium tetrachloride.

The product of titanium halide reduction with aluminum preferably is TiCl₃·1/3AlCl₃.

The product of titanium halide reduction with magnesium preferably is TiCl₃·1/2MgCl₂.

According to the present disclosure, the magnesium element is derived from a magnesium halide. The magnesium halide preferably is at least one selected from magnesium fluoride, magnesium chloride, magnesium bromide and magnesium iodide, more preferably is magnesium chloride.

According to the present disclosure, preferably, the electron donor is at least one selected from ester compounds, ether compounds, and ketone compounds.

In a further preferred embodiment, the electron donor is selected from alkyl esters of C₁-C₄ saturated aliphatic carboxylic acids, alkyl esters of C₇-C₈ aromatic carboxylic acids, C₂-C₆ aliphatic ethers, C₃-C₄ cyclic ethers, and C₃-C₆ saturated aliphatic ketones.

In an even further preferred embodiment, the electron donor is at least one selected from methyl formate, ethyl formate, isopropyl formate, n-propyl formate, methyl acetate, ethyl acetate, n-propyl acetate, isopropyl acetate, n-butyl acetate, isobutyl acetate, ethyl ether, propyl ether, hexyl ether, tetrahydrofuran, acetone and methyl isobutyl ketone.

In a still further preferred embodiment, the electron donor is at least one selected from methyl formate, ethyl acetate, butyl acetate, ethyl ether, hexyl ether, tetrahydrofuran, acetone and methyl isobutyl ketone; and optimally is tetrahydrofuran.

The above-mentioned electron donors may be used separately or in combination.

According to the present disclosure, preferably, the inorganic oxide support is selected from silicon oxides and/or aluminum oxides, more preferably is silicon dioxide.

In a further preferred embodiment, the particle size of the inorganic oxide support is 0.01-10 µm, preferably is 0.01-5 µm, more preferably is 0.1-1 µm.

In this case, the silicon oxide or aluminum oxide is an inert support. Using an inert support in the spray drying process is conductive to controlling the shape and composition of the catalyst particles and conductive to the spray molding, and results in a catalyst having good particle shape and high strength.

In a preferred embodiment of the present disclosure, based on total weight 100 wt%, the catalyst component comprises:
0.1-5 wt% of titanium, measured in titanium element;
0.2-10.2 wt% of magnesium, measured in magnesium element;
15-40 wt% of electron donor;
0.01-15 wt% of organic silicon polymer; and
1-70 wt% of inorganic oxide support.

In a further preferred embodiment, based on total weight 100 wt%, the catalyst component comprises:
0.5-4 wt% of titanium, measured in titanium element;
4-8 wt% of magnesium, measured in magnesium element;
20-35 wt% of electron donor;
0.1-10 wt% of organic silicon polymer; and
10-60 wt% of inorganic oxide support.

In a still further preferred embodiment, based on total weight 100 wt%, the catalyst component comprises:
1-3.5 wt% of titanium, measured in titanium element;
5.5-8 wt% of magnesium, measured in magnesium element;
23-35 wt% of electron donor;
0.6-8 wt% of organic silicon polymer; and
15-53 wt% of inorganic oxide support.

In the present disclosure, the content of the organic silicon polymer may be calculated according to the proportion of the actually fed organic silicon polymer in the catalyst product.

In a preferred embodiment of the present disclosure, D₁₀ is greater than 6.6 µm as detected in the detection of the particle size of the catalyst component, wherein D₁₀ represents the portion of particles with diameters smaller than this value in the product is 10% of the total volume.

In a further preferred embodiment, the size distribution is smaller than 1.77 as detected in the detection of the particle size of the catalyst component.

The catalyst component in the present disclosure has narrow size distribution and a high D₁₀ value, which indicate that the content of fine particles in the catalyst component is low. Thus, the generation of fine polymer powder can be avoided largely in the subsequent polymerization process.

A second purpuse of the present disclosure is to provide a method for preparing the catalyst component of one of the purpuses of the present disclosure. The method comprises the following steps:
step 1: mixing raw materials, comprising a titanium-containing compound, a magnesium halide, an electron donor, an organic silicon polymer and an inorganic oxide support, to obtain a slurry suspension;
step 2: carrying out spray drying, to obtain the catalyst component.

In a preferred embodiment of the present disclosure, in the step 1, the titanium-containing compound and the magnesium halide are mixed with the electron donor first, to obtain a mother solution.

In a further preferred embodiment, the inorganic oxide support and the organic silicon polymer are added during or after the preparation process of the mother solution, to obtain the slurry suspension. Thus, the function of the organic silicon polymer as a binder can be fully utilized, so that the inorganic oxide support in the catalyst can aggregate more tightly, thereby the particle strength of the catalyst is improved, the breaking of the catalyst in the polymerization process can be reduced, the content of fine powder in the suffer can be decreased, and the bulk density of the polymer can be increased.

The mixture of the inorganic oxide support and the organic silicon polymer can be added at any time during the preparation of the mother solution. For example, the magnesium halide, the titanium-containing compound, the inorganic oxide support and the organic silicon polymer can be mixed in the electron donor and controlled to react to obtain the slurry solution, and then the obtained slurry solution can be spray-dried to obtain the catalyst component.

In the above preparation method, a sufficient amount of inorganic oxide support can be mixed with the mother solution to form a slurry solution suitable for spray drying.

In a preferred embodiment of the present disclosure, in the preparation process, the molar ratio of the electron donor to the magnesium halide is (5.0-50): 1, the mass ratio of the organic silicon polymer to the magnesium halide is (0.01-1.0):1, the molar ratio of the titanium-containing compound to the magnesium halide is (0.1-1.0):1, and the molar ratio of the inorganic oxide to the magnesium halide is (1.0-5.0):1.

In a further preferred embodiment, in the preparation process, the molar ratio of the electron donor to the magnesium halide is (10-45): 1, the mass ratio of the organic silicon polymer to the magnesium halide is (0.01-0.5):1, the molar ratio of the titanium-containing compound to the magnesium halide is (0.1-0.5):1, and the molar ratio of the inorganic oxide to the magnesium halide is (1.0-4.0):1.

In the present disclosure, the electron donor not only has a function of donating electrons, but also serves as a solvent of the system.

In a preferred embodiment of the present disclosure, the mixing in the step 1 is carried out at a temperature within a range of normal temperature to 85°C for 0.1 h or more,
wherein the normal temperature is 25±5°C.

In a further preferred embodiment, the mixing in the step 1 is carried out at 45-75°C for 1.0-10.0 h.

In a preferred embodiment of the present disclosure, in the step 2, the spray drying is carried out under the following conditions: inlet temperature of 100-240°C and outlet temperature of 60-130°C.

In a further preferred embodiment, in the step 2, the spray drying is carried out under the following conditions: inlet temperature of 120-160°C and outlet temperature of 90-115°C.

A third purpuse of the present disclosure is to provide a catalyst for olefin polymerization or copolymerization, comprising: (A) the catalyst component of the first purpuse of the present disclosure or a catalyst component obtained with the preparation method of the second purpuse of the present disclosure; (B) an organo-aluminum compound represented by a general formula A1R_{b}X'_{3-b}, wherein R is hydrogen or C₁-C₂₀ alkyl; X' is halogen; and 0 < b ≤ 3.

The halogen preferably is chlorine, bromine or iodine.

The value of b preferably meets 1 < b ≤ 3.

In a preferred embodiment of the present disclosure, the organo-aluminum compound is at least one selected from triethylaluminum, triisobutyl aluminum, tri-n-hexyl aluminum, tri-n-octyl aluminum and diethylaluminum chloride.

In a preferred embodiment of the present disclosure, the molar ratio of the organo-aluminum compound to the catalyst component is (5-1,000):1, more preferably is (10-200):1.

The molar mass of the organo-aluminum compound is measured in the molar mass of aluminum element, and the molar mass of the catalyst component is measured in the molar mass of titanium element.

To make the solid catalyst component obtained through the spray drying process suitable for producing an ethylene polymer, it is necessary to activate the catalyst component with the organo-aluminum compound as an activator component.

In a preferred embodiment of the present disclosure, the catalyst component and the organo-aluminum compound are placed in a hydrocarbon solvent for reaction to obtain the catalyst.

In a further preferred embodiment, the hydrocarbon solvent is at least one selected from isopentane, hexane, heptane, toluene, xylene, naphtha and mineral oil.

In another preferred embodiment, the catalyst component and the organo-aluminum compound are added in the olefin polymerization process for reaction, so as to initiate olefin polymerization.

A fourth purpuse of the present disclosure is to provide an application of the catalyst of the third purpuse of the present disclosure in olefin polymerization, preferably in ethylene homopolymerization or copolymerization.

The catalyst in the present disclosure is applicable to homopolymerization of ethylene and copolymerization of ethylene and other α-olefin, wherein the α-olefin is one or more selected from propylene, butylene, pentene, hexylene, octylene, 4-methyl pentene-1, or a mixture thereof. The polymerization process employs a vapor phase process, slurry process or solution process, which is more suitable for vapor phase polymerization.

Hereunder the present disclosure will be further detailed in embodiments. It is necessary to point out that the following embodiments are only provided to further describe the present disclosure, but shall not be understood as constituting any limitation to the scope of protection of the present disclosure. Any non-essential improvement or modification to the present disclosure made by those skilled in the art on the basis of the present disclosure shall be deemed as falling in the scope of protection of the present disclosure.

Unless otherwise specified, all raw materials used in the examples and comparative examples are those disclosed in the prior art, for example, materials that are commercially available or can be prepared with preparation methods disclosed in the prior art.

Testing methods:
1. Activity: expressed by the weight of the resin obtained with 1 g catalyst;
2. Melt index (MI) of polymer: determined under 2.16 kg load at 190°C, as per ASTM D1238-99;
3. Apparent bulk density (BD) of polymer: tested as per ASTM D1895-69 Standard;
4. Basis for sieving analysis: as per ASTM D-1921 Standard;
5. Particle size of catalyst: measured with a MASTERSIZER2000 particle size analyzer, expressed by D₁₀, D₅₀, and D₉₀, i.e., special percentage distribution of standard logarithmic size distribution; for example, if the particle size of the catalyst has the D₅₀ of 24 µm, it means the mean particle diameter is 24 µm; the D₁₀ of 7 µm means that 10% of the particles has a diameter smaller than 7 µm; the D₉₀ of 45 µm means that 90% of the particles has a diameter smaller than 45 µm;
6. Contents of titanium and magnesium: measured with a Spectrumlab 752s ultraviolet-visible spectrophotometer; the THF content was determined with an Aglient 7890A gas chromatograph from Aglient in USA; the content of the organic silicon polymer was obtained by calculating according to the usage amount and the weight of the product, specifically was calculated by (weight of usage amount / weight of the catalyst product) * 100 wt%; the remaining content was the content of the support material.

The organic silicon polymer used in the Examples was prepared with the preparation method specified in Silicone Material published by China Materials Publishing House in 1999.

In the embodiments, the content of the organic silicon polymer in the catalyst was calculated according to the proportion of the actually fed organic silicon polymer in the catalyst product.

### Preparation Example 1

100 mL xylene, 50 mL acetone, 11.5 g dimethyldichlorosilane and 30.8 g methyltrichlorosilane were added into a 500 mL three-neck reaction flask. Under vigorous stirring, a solution consisting of 50 mL acetone and 20 g water was slowly added dropwise into the three-neck reaction flask in an ice water bath (r/s = 1.3). After the temperature of the reaction solution was slowly increased to 25°C, the reaction solution was stirred for 24 hours. The reaction solution was washed with deionized water to be neutral and dried with anhydrous magnesium sulfate for 24 hours. After the dryer was removed by filtering, the solvent was removed by vacuum drying, and a white solid organic silicon polymer having a reticular structure was obtained, with a yield of 81%. The structure of the product was characterized by gel permeation chromatography and ²⁹Si-NMR. It can be seen from the result of gel permeation chromatography that the number-average molecular weight of the product was 2×10⁵ g/mol, and the molecular weight distribution of the product was 2.1; it can be seen from the result of ²⁹Si-NMR that the product contained 29.5 mol% of -Me₂SiO- units and 70.5 mol% of MeSiO_{3/2} units, and the molecular composition was [RₓSiO_{(4-x)/2}]ₘ, wherein x was 1.295, R was methyl, and m was the value corresponding to the number-average molecular weight of the obtained organic silicon polymer. The obtained organic silicon polymer was designated as S1.

### Preparation Example 2

100 mL xylene, 50 mL acetone, 11.5 g dimethyldichlorosilane and 43.6 g phenyltrichlorosilane were added into a 500 mL three-neck reaction flask. Under vigorous stirring, a solution consisting of 50 mL acetone and 22 g water was slowly added dropwise into the three-neck reaction flask in an ice water bath (r/s = 1.3). After the temperature of the reaction solution was slowly increased to 25°C, the reaction solution was stirred for 24 hours. The reaction solution was washed with deionized water to be neutral and dried with anhydrous magnesium sulfate for 24 hours. After the dryer was removed by filtering, the solvent was removed by vacuum drying, and a white solid organic silicon polymer having a reticular structure was obtained, with a yield of 82%. The structure of the product was characterized by gel permeation chromatography and ²⁹Si-NMR. It can be seen from the result of gel permeation chromatography that the number-average molecular weight of the product was 5×10⁵ g/mol, and the molecular weight distribution of the product was 2.5; it can be seen from the result of ²⁹Si-NMR that the product contained 29.7 mol% of -Me₂SiO- units and 70.3 mol% of PhSiO_{3/2} units, and the molecular composition was [RₓSiO_{(4-x)/2}]ₘ, wherein x was 1.297, R was methyl and phenyl, and m was the value corresponding to the number-average molecular weight of the obtained organic silicon polymer. The obtained organic silicon polymer was designated as S2.

### Preparation example 3

100 mL xylene, 50 mL acetone and 36.0 g dimethyldichlorosilane were added into a 500 mL three-neck reaction flask. Under vigorous stirring, a solution consisting of 50 mL acetone and 22 g water was slowly added dropwise into the three-neck reaction flask in an ice water bath (r/s = 2). After the temperature of the reaction solution was slowly increased to 25°C, the reaction solution was stirred for 24 hours. The reaction solution was washed with deionized water to be neutral and dried with anhydrous magnesium sulfate for 24 hours. After the dryer was removed by filtering, the solvent was removed by vacuum drying, and a solid organic silicon polymer having a linear structure was obtained, with a yield of 86%. The structure of the product was characterized by gel permeation chromatography and ²⁹Si-NMR. It can be seen from the result of gel permeation chromatography that the number-average molecular weight of the product was 1×10⁵ g/mol, and the molecular weight distribution of the product was 1.3; it can be seen from the result of ²⁹Si-NMR that the product contained 100 mol% of -Me₂SiO- units, and the molecular composition was [RₓSiO_{(4-x)/2}]ₘ, wherein x was 2, R was methyl, and m was the value corresponding to the number-average molecular weight of the obtained organic silicon polymer. The obtained organic silicon polymer was designated as S3.

### Preparation Example 4

100 mL xylene, 50 mL acetone and 33.6 g (CH₂=CH)SiHCl₂ were added into a 500 mL three-neck reaction flask. Under vigorous stirring, a solution consisting of 50 mL acetone and 22 g water was slowly added dropwise into the three-neck reaction flask in an ice water bath (r/s = 2). After the temperature of the reaction solution was slowly increased to 25°C, the reaction solution was stirred for 24 hours. The reaction solution was washed with deionized water to be neutral and dried with anhydrous magnesium sulfate for 24 hours. After the dryer was removed by filtering, the solvent was removed by vacuum drying, and a solid organic silicon polymer having a linear structure was obtained, with a yield of 80%. The structure of the product was characterized by gel permeation chromatography and ²⁹Si-NMR. It can be seen from the result of gel permeation chromatography that the number-average molecular weight of the product was 2×10³ g/mol, and the molecular weight distribution of the product was 1.2; it can be seen from the result of ²⁹Si-NMR that the product contained 100 mol% of -(CH₂=CH)HSiO- units, and the molecular composition was [R₁R₂SiO_{(4-x)/2}]ₘ, wherein x was 2, R₁ and R₂ were vinyl and hydrogen, and m was the value corresponding to the number-average molecular weight of the obtained organic silicon polymer. The obtained organic silicon polymer was designated as S4.

### Preparation Example 5

100 mL xylene, 50 mL acetone, 1.8 g dimethyldichlorosilane, 16.4 g methyltrichlorosilane and 59.2 g phenyltrichlorosilane were added into a 500 mL three-neck reaction flask. Under vigorous stirring, a solution consisting of 50 mL acetone and 22 g water was slowly added dropwise into the three-neck reaction flask in an ice water bath (r/s = 1.03). After the temperature of the reaction solution was slowly increased to 25°C, the reaction solution was stirred for 16 hours. The reaction solution was washed with deionized water to be neutral and dried with anhydrous magnesium sulfate for 24 hours. After the dryer was removed by filtering, the solvent was removed by vacuum drying, and a solid organic silicon polymer having a reticular structure was obtained, with a yield of 83%. The structure of the product was characterized by gel permeation chromatography and ²⁹Si-NMR. It can be seen from the result of gel permeation chromatography that the number-average molecular weight of the product was 7.8×10⁵ g/mol, and the molecular weight distribution of the product was 6.1; it can be seen from the result of ²⁹Si-NMR that the product contained 3.4 mol% of -Me₂SiO- units, 28.0 mol% of MeSiO_{3/2} units and 68.6 of mol% PhSiO_{3/2} units, and the molecular composition was [RₓSiO_{(4-x)/2}]ₘ, wherein x was 1.034, R was methyl and phenyl, and m was the value corresponding to the number-average molecular weight of the obtained organic silicon polymer. The obtained organic silicon polymer was designated as S5.

### Example 1

### (1) Preparation of the catalyst component

120 mL tetrahydrofuran (THF), 4.2 g magnesium chloride and 1.0 mL TiCl₄ were successively added into a 250 mL four-neck flask that was equipped with a temperature controller, a stirrer and a reflux condenser, and purged and shielded by nitrogen gas; the temperature of the obtained solution was increased to 68°C under stirring, and reflux reaction was carried out at the temperature for 4 hours to obtain a mother solution;
5.5 g silica gel (Cabot Corporation TS-610, with particle size smaller than 1 µm) and 1.0 g organic silicon polymer S1 were added, at a weight ratio of the silica gel to the organic silicon polymer S1 equal to 5.5, into a 250 mL four-neck flask that was equipped with a temperature controller, a stirrer and a reflux condenser, and purged and shielded by nitrogen, the above mother solution was added into the four-neck flask under stirring, and the obtained solution was further stirred for reflux reaction at a constant temperature of 68°C for 2 hours, so that the silica gel was fully dispersed in the mother solution, to obtain a slurry suspension;
Nitrogen carrier gas was introduced into a closed-loop circulation gas-flow spray dryer (e.g., BUCHI Mini Spray Dryer B-290) at an inlet temperature of 145°C, the obtained slurry suspension at 43°C was added into the circulation dryer, the feed rate of the slurry suspension and the flow rate of the spray gas (N₂) at room temperature were adjusted to about 8 mL/min and about 30m³/h respectively, the flow rate of the carrier gas (N₂) was adjusted so that the outlet temperature was 95°C, to obtain a solid catalyst component. The obtained catalyst component has desired particle size D₅₀ of about 20-23 µm. The calculated content of the organic silicon polymer S1 in the catalyst is 5.38 wt%, the content analysis of the other components is shown in Table 1, and the support accounts for the remaining content.

### (2) Polymerization of ethylene slurry

1 L hexane was added into a 2 L polymerizer purged with nitrogen first and then purged with hydrogen, and 1 mL triethylaluminum (1M) and 20 mg dry catalyst powder (i.e., the catalyst prepared in the step (1)) were added at the same time, the obtained mixture was heated up to 70°C, hydrogen was added to 0.28 MPa, then ethylene was added to 1.03 MPa, the mixture was heated up to 85°C and kept at constant temperature of 85°C and constant pressure for reaction for 2 hours, and then the product was cooled and discharged. The result of the polymerization of ethylene slurry is shown in Table 2.

### (3) Polymerization of ethylene slurry at high hydrogen concentration

1 L hexane was added into a 2 L polymerizer purged with nitrogen first and then purged with hydrogen, and 1 mL triethylaluminum (1M) and 80 mg dry catalyst powder were added at the same time, the obtained mixture was heated up to 70°C, hydrogen was added to 0.68 MPa, then ethylene was added to 1.03 MPa, the mixture was heated up to 85°C and kept at constant temperature of 85°C and constant pressure for reaction for 2 hours, and then the product was cooled and discharged. The result of the polymerization of ethylene slurry at high hydrogen concentration is shown in Table 3.

### Example 2

Compared with the Example 1, the only difference lies in: "5.5 g silica gel (Cabot Corporation TS-610, with particle size smaller than 1 µm) and 1.0 g organic silicon polymer S1 were added, at a weight ratio of the silica gel to the organic silicon polymer S1 equal to 5.5" in the preparation of the catalyst component in the step (1) is changed to "6.4 g silica gel (Cabot Corporation TS-610, with particle size smaller than 1 µm) and 0.1 g organic silicon polymer S 1 were added, at a weight ratio of the silica gel to the organic silicon polymer S1 equal to 64". The calculated content of the organic silicon polymer S1 in the catalyst is 0.585 wt%, the content analysis of the other components is shown in Table 1, and the support accounts for the remaining content.

### Example 3

Compared with the Example 1, the only difference lies in: "5.5 g silica gel (Cabot Corporation TS-610, with particle size smaller than 1 µm) and 1.0 g organic silicon polymer S1 were added, at a weight ratio of the silica gel to the organic silicon polymer S1 equal to 5.5" in the preparation of the catalyst component in the step (1) is changed to "6.0 g silica gel (Cabot Corporation TS-610, with particle size smaller than 1 µm) and 0.5 g organic silicon polymer S 1 were added, at a weight ratio of the silica gel to the organic silicon polymer S1 equal to 12". The calculated content of the organic silicon polymer S1 in the catalyst is 2.75 wt%, the content analysis of the other components is shown in Table 1, and the support accounts for the remaining content.

### Example 4

Compared with the Example 1, the only difference lies in: "1.0 g organic silicon polymer S1" in the preparation of the catalyst component in the step (1) is changed to "1.0 g organic silicon polymer S2". The calculated content of the organic silicon polymer S2 in the catalyst is 5.56 wt%, the content analysis of the other components is shown in Table 1, and the support accounts for the remaining content.

### Example 5

Compared with the Example 1, the only difference lies in: "1.0 g organic silicon polymer S1" in the preparation of the catalyst component in the step (1) is changed to "1.0 g organic silicon polymer S3". The calculated content of the organic silicon polymer S3 in the catalyst is 5.56 wt%, the content analysis of the other components is shown in Table 1, and the support accounts for the remaining content.

### Example 6

Compared with the Example 1, the only difference lies in: "1.0 g organic silicon polymer S1" in the preparation of the catalyst component in the step (1) is changed to "1.0 g organic silicon polymer S4". The calculated content of the organic silicon polymer S4 in the catalyst is 5.56 wt%, the content analysis of the other components is shown in Table 1, and the support accounts for the remaining content.

### Example 7

Compared with the Example 1, the only difference lies in: "1.0 mL TiCl₄" in the preparation of the catalyst component in the step (1) is changed to "1.4 g TiCl₃·1/3AlCl₃". The content of the organic silicon polymer is 6.00 wt%.

### Example 8

Compared with the Example 1, the only difference lies in: "1.0 mL TiCl₄" in the preparation of the catalyst component in the step (1) is changed to "1.5 g TiCl₃·1/2MgCl₂". The content of the organic silicon polymer is 5.76 wt%.

### Example 9

### (1) Preparation of the catalyst component

100 mL tetrahydrofuran (THF), 4.2 g magnesium chloride and 4 mL TiCl₄ were successively added into a 250 mL four-neck flask that was equipped with a temperature controller, a stirrer and a reflux condenser, and purged and shielded by nitrogen gas; the temperature of the obtained solution was increased to 85°C under stirring, and reflux reaction was carried out at the temperature for 3 hours to obtain a mother solution;

2.65 g silica gel (Cabot Corporation TS-610, with particle size smaller than 1 µm) and 0.21 g organic silicon polymer S1 were added, at a weight ratio of the silica gel to the organic silicon polymer S 1 equal to 12.6, into a 250 mL four-neck flask that was equipped with a temperature controller, a stirrer and a reflux condenser, and purged and shielded by nitrogen, the above mother solution was added into the four-neck flask under stirring, and the obtained solution was further stirred for reflux reaction at a constant temperature of 85°C for 1 hour, so that the silica gel was fully dispersed in the mother solution, to obtain a slurry suspension;

Nitrogen carrier gas was introduced into a closed-loop circulation gas-flow spray dryer (e.g., BUCHI Mini Spray Dryer B-290) at an inlet temperature of 150°C, the obtained slurry suspension at 43°C was added into the circulation dryer, the feed rate of the slurry suspension and the flow rate of the spray gas (N₂) at room temperature were adjusted to about 8 mL/min and about 30m³/h respectively, the flow rate of the carrier gas (N₂) was adjusted so that the outlet temperature was 100°C, to obtain a solid catalyst component.

### (2) Polymerization of ethylene slurry

1 L hexane was added into a 2 L polymerizer purged with nitrogen first and then purged with hydrogen, and 1 mL triethylaluminum (1M) and 20 mg dry catalyst powder were added at the same time, the obtained mixture was heated up to 70°C, hydrogen was added to 0.28 MPa, then ethylene was added to 1.03 MPa, the mixture was heated up to 85°C and kept at constant temperature of 85°C and constant pressure for reaction for 2 hours, and then the product was cooled and discharged.

### Example 10

### (1) Preparation of the catalyst component

160 mL ethyl acetate, 8.1 g magnesium bromide and 2.5 mL TiCl₄ were successively added into a 500 mL four-neck flask that was equipped with a temperature controller, a stirrer and a reflux condenser, and purged and shielded by nitrogen gas; the temperature of the obtained solution was increased to 75°C under stirring, and reflux reaction was carried out at the temperature for 2 hours to obtain a mother solution;

10.5 g aluminum oxide (with particle size smaller than 1 µm) and 2.08 g organic silicon polymer S1 were added, at a weight ratio of the silica gel to the organic silicon polymer S1 equal to 5.04, into a 500 mL four-neck flask that was equipped with a temperature controller, a stirrer and a reflux condenser, and purged and shielded by nitrogen, the above mother solution was added into the four-neck flask under stirring, and the obtained solution was further stirred for reflux reaction at a constant temperature of 75°C for 1 hour, so that the silica gel was fully dispersed in the mother solution, to obtain a slurry suspension;

Nitrogen carrier gas was introduced into a closed-loop circulation gas-flow spray dryer (e.g., BUCHI Mini Spray Dryer B-290) at an inlet temperature of 160°C, the obtained slurry suspension at 43°C was added into the circulation dryer, the feed rate of the slurry suspension and the flow rate of the spray gas (N₂) at room temperature were adjusted to about 8 mL/min and about 30m³/h respectively, the flow rate of the carrier gas (N₂) was adjusted so that the outlet temperature was 115°C, to obtain a solid catalyst component.

### (2) Polymerization of ethylene slurry

1 L hexane was added into a 2 L polymerizer purged with nitrogen first and then purged with hydrogen, and 1 mL triethylaluminum (1M) and 20 mg dry catalyst powder were added at the same time, the obtained mixture was heated up to 70°C, hydrogen was added to 0.28 MPa, then ethylene was added to 1.03 MPa, the mixture was heated up to 85°C and kept at constant temperature of 85°C and constant pressure for reaction for 2 hours, and then the product was cooled and discharged.

### Example 11

### (1) Preparation of the catalyst component

72 mL ethyl propyl ether, 2.75 g magnesium fluoride and 0.5 mL TiCl₄ were successively added into a 250 mL four-neck flask that was equipped with a temperature controller, a stirrer and a reflux condenser, and purged and shielded by nitrogen gas; the temperature of the obtained solution was increased to 50°C under stirring, and reflux reaction was carried out at the temperature for 10 hours to obtain a mother solution;

8 g silica gel (Cabot Corporation TS-610, with particle size smaller than 1 µm) and 0.42 g organic silicon polymer S1 were added, at a weight ratio of the silica gel to the organic silicon polymer S1 equal to 19, into a 250 mL four-neck flask that was equipped with a temperature controller, a stirrer and a reflux condenser, and purged and shielded by nitrogen, the above mother solution was added into the four-neck flask under stirring, and the obtained solution was further stirred for reflux reaction at a constant temperature of 50°C for 5 hours, so that the silica gel was fully dispersed in the mother solution, to obtain a slurry suspension;

Nitrogen carrier gas was introduced into a closed-loop circulation gas-flow spray dryer (e.g., BUCHI Mini Spray Dryer B-290) at an inlet temperature of 120°C, the obtained slurry suspension at 43°C was added into the circulation dryer, the feed rate of the slurry suspension and the flow rate of the spray gas (N₂) at room temperature were adjusted to about 8 mL/min and about 30m³/h respectively, the flow rate of the carrier gas (N₂) was adjusted so that the outlet temperature was 90°C, to obtain a solid catalyst component.

### (2) Polymerization of ethylene slurry

1 L hexane was added into a 2 L polymerizer purged with nitrogen first and then purged with hydrogen, and 1 mL triethylaluminum (1M) and 20 mg dry catalyst powder were added at the same time, the obtained mixture was heated up to 70°C, hydrogen was added to 0.28 MPa, then ethylene was added to 1.03 MPa, the mixture was heated up to 85°C and kept at constant temperature of 85°C and constant pressure for reaction for 2 hours, and then the product was cooled and discharged.

### Comparative Example 1

Compared with the Example 1, the only difference lies in: "1.0 g organic silicon polymer S1" in the preparation of the catalyst component in step (1) is changed to "1.0 g organic silicon polymer DS1 ((CH₃)₂SiCl₂ and (CH₃)₃SiCl were used as mixed monomers, the r/s value was controlled to be 2.5, an organic silicon polymer with low molecular weight was obtained through monomer hydrolysis, the number-average molecular weight of the organic silicon polymer was 700 g/mol, and the molecular weight distribution of the organic silicon polymer was 1.2)". The calculated content of the organic silicon polymer in the catalyst is 5.45 wt%, the content analysis of the other components is shown in Table 1, and the support accounts for the remaining content. In addition, the result of the polymerization of ethylene slurry is shown in Table 2, and the result of the polymerization of ethylene slurry at high hydrogen concentration is shown in Table 3.

The preparation method of an organic silicon polymer DS1 is as follows:
100 mL xylene, 50 mL acetone, 18.0 g dimethyldichlorosilane and 15.1 g trimethylchlorosilane were added into a 500 mL three-neck reaction flask. Under vigorous stirring, a solution consisting of 50 mL acetone and 24 g water was slowly added dropwise into the three-neck reaction flask in an ice water bath (r/s = 2.5). After the temperature of the reaction solution was slowly increased to 25°C, the reaction solution was stirred for 24 hours. The reaction solution was washed with deionized water to be neutral and dried with anhydrous magnesium sulfate for 24 hours. After the dryer was removed by filtering, the solvent was removed by vacuum drying, and a liquid organic silicon polymer with low molecular weight was obtained, with a yield of 85%. The structure of the product was characterized by gel permeation chromatography and ²⁹Si-NMR. It can be seen from the result of gel permeation chromatography that the number-average molecular weight of the product was 700 g/mol, and the molecular weight distribution of the product was 1.2; it can be seen from the result of ²⁹Si-NMR that the product contains 51.0 mol% of -Me₂SiO- units and 49.0 mol% of Me₃SiO units. The obtained organic silicon polymer was designated as DS1.

### Comparative Example 2

Compared with the Example 1, the only difference lies in: "1.0 g organic silicon polymer S1" in the preparation of the catalyst component in step (1) is changed to "1.0 g organic silicon polymer DS2 ((CH₃CH₂)(CH₃)SiCl₂ and (CH₃)₃SiCl were used as mixed monomers, the r/s value was controlled to be 2.3, an organic silicon polymer with low molecular weight was obtained through monomer hydrolysis, the number-average molecular weight of the organic silicon polymer was 800 g/mol, and the molecular weight distribution of the organic silicon polymer was 7.9)". The calculated content of the organic silicon polymer in the catalyst is 5.45 wt%, the content analysis of the other components is shown in Table 1, and the support accounts for the remaining content. In addition, the result of the polymerization of ethylene slurry is shown in Table 2, and the result of the polymerization of ethylene slurry at high hydrogen concentration is shown in Table 3.

The preparation method of an organic silicon polymer DS2 is as follows:
100 mL xylene, 50 mL acetone, 25.2 g (CH₃CH₂)(CH₃)SiCl₂ and 8.2 g trimethylchlorosilane were added into a 500 mL three-neck reaction flask. Under vigorous stirring, a solution consisting of 50 mL acetone and 22 g water was slowly added dropwise into the three-neck reaction flask in an ice water bath (r/s = 2.3). After the temperature of the reaction solution was slowly increased to 25°C, the reaction solution was stirred for 24 hours. The reaction solution was washed with deionized water to be neutral and dried with anhydrous magnesium sulfate for 24 hours. After the dryer was removed by filtering, the solvent was removed by vacuum drying, and a liquid organic silicon polymer with low molecular weight was obtained, with a yield of 86%. The structure of the product was characterized by gel permeation chromatography and ²⁹Si-NMR. It can be seen from the result of gel permeation chromatography that the number-average molecular weight of the product was 800 g/mol, and the molecular weight distribution of the product was 7.9; it can be seen from the result of ²⁹Si-NMR that the product contains 70.1 mol% of -R₁R₂SiO- units (R₁ and R₂ are ethyl and methyl) and 29.9 mol% of Me₃SiO units. The obtained organic silicon polymer was designated as DS2.

### Comparative Example 3

The procedure in the Example 1 was repeated, except that no organic silicon polymer was added in the preparation of the catalyst component.

### (1) Preparation of the catalyst component

120 mL tetrahydrofuran (THF), 4.2 g magnesium chloride and 1.0 mL TiCl₄ were successively added into a 250 mL four-neck flask that was equipped with a temperature controller, a stirrer and a reflux condenser, and purged and shielded by nitrogen gas; the temperature of the obtained solution was increased to 68°C under stirring, and reflux reaction was carried out at the temperature for 4 hours to obtain a mother solution;
6.5 g silica gel (Cabot Corporation TS-610, with particle size smaller than 1 µm) was added into a 250 mL four-neck flask that was equipped with a temperature controller, a stirrer and a reflux condenser, and purged and shielded by nitrogen, the above mother solution was added into the four-neck flask under stirring, and the obtained solution was further stirred for reflux reaction at a constant temperature of 68°C for 2 hours, so that the silica gel was fully dispersed in the mother solution, to obtain a slurry suspension;
Nitrogen carrier gas was introduced into a closed-loop circulation gas-flow spray dryer (e.g., BUCHI Mini Spray Dryer B-290) at an inlet temperature of 145°C, the obtained slurry suspension at 43°C was added into the circulation dryer, the feed rate of the slurry suspension and the flow rate of the spray gas (N₂) at room temperature were adjusted to about 8 mL/min and about 30m³/h respectively, the flow rate of the carrier gas (N₂) was adjusted so that the outlet temperature was 95°C, to obtain a solid catalyst component. The obtained catalyst component has desired particle size D₅₀ of about 20-23 µm. The structural analysis of the obtained catalyst is shown in Table 1.

### (2) Polymerization of ethylene slurry

1 L hexane was added into a 2 L polymerizer purged with nitrogen first and then purged with hydrogen, and 1 mL triethylaluminum (1M) and 20 mg dry catalyst powder were added at the same time, the obtained mixture was heated up to 70°C, hydrogen was added to 0.28 MPa, then ethylene was added to 1.03 MPa, the mixture was heated up to 85°C and kept at constant temperature of 85°C and constant pressure for reaction for 2 hours, and then the product was cooled and discharged. The result of the polymerization of ethylene slurry is shown in Table 2.

### (3) Polymerization of ethylene slurry at high hydrogen concentration

1 L hexane was added into a 2 L polymerizer purged with nitrogen first and then purged with hydrogen, and 1 mL triethylaluminum (1M) and 80 mg dry catalyst powder were added at the same time, the obtained mixture was heated up to 70°C, hydrogen was added to 0.68 MPa, then ethylene was added to 1.03 MPa, the mixture was heated up to 85°C and kept at constant temperature of 85°C and constant pressure for reaction for 2 hours, and then the product was cooled and discharged. The result of the polymerization of ethylene slurry at high hydrogen concentration is shown in Table 3.

### Comparative Example 4

The procedure in the Example 4 was repeated, except for the following difference: 1.0 g silicone monomer (CH₃)₂SiCl₂ was directly added in replacement of the organic silicon polymer in the Example 4. The structural analysis of the obtained catalyst is shown in Table 1, and the result of the polymerization of ethylene slurry is shown in Table 2.

### Comparative Example 5

The procedure in the Example 1 was repeated, except for the following difference: 1.0g silane coupling agent KH550 (aminopropyl triethoxysilane) was directly added in replacement of the organic silicon polymer in the Example 1. The structural analysis of the obtained catalyst is shown in Table 1, and the result of the polymerization of ethylene slurry is shown in Table 2.

**Table 1. Structural Analysis of the Catalysts**

| | Ti wt% | Mg wt% | THF wt% | Die µm | D₅₀ µm | D₉₀ µm | Particle Size Distrib ution |
|---|---|---|---|---|---|---|---|
| Example 1 | 2.35 | 6.38 | 26.5 | 6.7 | 22.6 | 45.9 | 1.735 |
| Example 2 | 2.39 | 6.24 | 28.5 | 6.8 | 22.5 | 46.6 | 1.769 |
| Example 3 | 2.40 | 6.48 | 27.2 | 7.0 | 21.8 | 45.3 | 1.757 |
| Example 4 | 2.38 | 6.36 | 26.8 | 6.9 | 22.1 | 46.1 | 1.774 |
| Example 5 | 2.43 | 6.45 | 26.9 | 7.2 | 22.3 | 44.7 | 1.682 |
| Example 6 | 2.41 | 6.43 | 27.2 | 7.0 | 22.2 | 45.1 | 1.716 |
| Example 7 | 2.37 | 6.42 | 27.1 | 6.8 | 21.6 | 44.9 | 1.764 |
| Example 8 | 2.40 | 6.69 | 27.4 | 7.1 | 22.5 | 45.1 | 1.689 |
| Example 9 | 4.52 | 6.32 | 31.3 | 6.8 | 22.6 | 45.9 | 1.730 |
| Comparative Example 1 | 2.38 | 6.37 | 26.8 | 6.9 | 22.1 | 45.8 | 1.760 |
| Comparative Example 2 | 2.39 | 6.40 | 27.8 | 7.1 | 22.4 | 46.3 | 1.750 |
| Comparative Example 3 | 2.36 | 5.97 | 29.8 | 5.7 | 22.4 | 46.3 | 1.813 |
| Comparative Example 4 | 2.38 | 6.16 | 28.7 | 6.0 | 22.7 | 45.9 | 1.758 |
| Comparative Example 5 | 2.40 | 6.08 | 29.1 | 5.9 | 22.8 | 46.8 | 1.794 |

It can be seen from Table 1: by adding the organic silicon polymer in the present disclosure, the cohesion of the catalyst support is increased effectively, the D₁₀ of the catalyst component particles is increased, fine particles are reduced, and the particle size distribution of the catalyst is narrowed; at the same time, the tetrahydrofuran content in the catalyst component is decreased, which is directly related to the addition of the organic silicon polymer.

**Table 2. Polymerization Performance of the Catalyst**

| | Activity ^{a.} gPE/gCat | MI_{2.16} g/10min | Bulk Desinty g/cm³ | Particle Size of Polymer Powder (µm) | | |
|---|---|---|---|---|---|---|
| | | | | >850 | 500-180 | <180 |
| Example 1 | 12375 | 1.76 | 0.360 | 20.9 | 72.2 | 6.9 |
| Example 2 | 12146 | 1.71 | 0.350 | 19.7 | 72.5 | 7.8 |
| Example 3 | 12673 | 1.56 | 0.380 | 21.8 | 72.1 | 6.1 |
| Example 4 | 13082 | 1.97 | 0.400 | 19.6 | 75.2 | 5.2 |
| Example 5 | 12360 | 1.65 | 0.355 | 20.6 | 73.1 | 6.3 |
| Example 6 | 12223 | 1.63 | 0.350 | 20.9 | 72.6 | 6.5 |
| Example 7 | 11765 | 1.66 | 0.360 | 21.1 | 70.6 | 8.3 |
| Example 8 | 12104 | 1.75 | 0.355 | 20.8 | 72.2 | 7.0 |
| Example 9 | 11526 | 1.35 | 0.315 | 30.6 | 60.8 | 8.6 |
| Comparative Example 1 | 11969 | 1.50 | 0.340 | 21.1 | 71.7 | 7.2 |
| Comparative Example 2 | 11955 | 1.48 | 0.335 | 22.6 | 70.0 | 7.4 |
| Comparative Example 3 | 11895 | 1.25 | 0.330 | 29.8 | 62.3 | 7.9 |
| Comparative Example 4 | 11946 | 1.36 | 0.335 | 25.3 | 67.1 | 7.6 |
| Comparative Example 5 | 12073 | 1.48 | 0.340 | 26.4 | 65.7 | 7.9 |

| | | | | | | |
|---|---|---|---|---|---|---|
| a. Polymerization conditions: T = 85°C, P(H₂)/P(C₂H₄) = 0.28/0.75, TEA(1M) = 1 mL, t = 2 hr. | | | | | | |

It can be seen from Table 2: by adding the organic silicon polymer in the present disclosure, the strength of the catalyst particles is increased, the catalyst has higher activity when used to catalyze ethylene polymerization, the bulk density of the obtained polyethylene powder is increased, the content of the fine powder is decreased, and the melt index is increased.

**Table 3. Polymerization Performance of Catalyst at High Hydrogen Concentration**

| | Activity ^{a.} gPE/gCat | MI_{2.16} g/10min | Bulk Density g/cm³ |
|---|---|---|---|
| Example 1 | 2090 | 218.4 | 0.390 |
| Example 4 | 2100 | 243.6 | 0.410 |
| Comparative Example 1 | 1943 | 120.8 | 0.370 |
| Comparative Example 2 | 1974 | 133.1 | 0.365 |
| Comparative Example 3 | 1927 | 90.5 | 0.350 |

| | | | |
|---|---|---|---|
| a. Polymerization conditions: T = 85°C, P(H₂)/P(C₂H₄) = 0.68/0.35, TEA(1M) = 1 mL, t = 2 hr. | | | |

It can be seen from Table 3: by adding the organic silicon polymer in the present disclosure, the sensitivity of the catalyst to hydrogen regulation is improved; when used to catalyze ethylene polymerization at a high hydrogen/ethylene ratio, the melt index of the obtained polyethylene powder is remarkably improved, and the hydrogen regulation responsivity is better.

While the present disclosure is described above in various embodiments, the description is illustrative rather than exhaustive, and the present disclosure is not limited to the embodiments disclosed above. It is obvious to those skills in the art that various modifications and alternations can be made without departing from the scope and spirit of the embodiments described above.

## Claims

1. A catalyst component for olefin polymerization or copolymerization, comprising titanium element, magnesium element, an electron donor, an organic silicon polymer, and an inorganic oxide support, wherein the molecular composition of the organic silicon polymer is [RₓSiO_{(4-x)/2}]ₘ, wherein R is selected from alkyl, aryl, alkenyl or hydrogen, x is 0 or more and 2 or less, and the value of m makes the number-average molecular weight of the organic silicon polymer be 1×10³-1 ×10⁶ g/mol.

2. The catalyst component of claim 1, wherein x is 1-2;
preferably, based on total weight 100 wt%, the content of the organic silicon polymer is 0.01-15 wt%.

3. The catalyst component of claim 1, wherein R is selected from C₁-C₆ alkyl, C₆-C₉ aryl, C₁-C₆ alkenyl or hydrogen;
preferably, R is selected from methyl, ethyl, propyl, phenyl, vinyl or hydrogen.

4. The catalyst component of any of claims 1-3, wherein the organic silicon polymer has a reticular structure or linear structure.

5. The catalyst component of any of claims 1-4, wherein the number-average molecular weight of the organic silicon polymer having a reticular structure is 2×10³-1 ×10⁶ g/mol, and the molecular weight distribution of the organic silicon polymer is 1-9.

6. The catalyst component of any of claims 1-5, wherein the number-average molecular weight of the organic silicon polymer having a linear structure is 1×10³-1×10⁵ g/mol, and the molecular weight distribution of the organic silicon polymer is 1-8.

7. The catalyst component of any of claims 1-6, wherein the organic silicon polymer is obtained through hydrolysis of one or more monomer(s) represented by a general formula R_{y}SiCl_{(4-y)}, wherein R is selected from alkyl, aryl, vinyl or hydrogen, y is an integer within a range of 0-3, and a molar ratio of R/Si of the monomer(s) is 2 or less.

8. The catalyst component of any of claims 1-7, wherein the titanium element is derived from a titanium-containing compound;
preferably, the titanium-containing compound is at least one selected from titanium halide, a product of titanium halide reduction with aluminum, and a product of titanium halide reduction with magnesium;
more preferably,
the titanium halide is selected from titanium bromide and/or titanium chloride; and/or,
the general formula of the product of titanium halide reduction with aluminum is TiXₘ·nAlXₚ, wherein 0 < n ≤ 1, 0 < m ≤ 3, 0 < p ≤ 3, and X is halogen; and/or,
the general formula of the product of titanium halide reduction with magnesium is TiXₘ·qMgXᵣ, wherein 0 < q ≤ 1, 0 < m ≤ 3, 0 < r ≤ 3, and X is halogen.

9. The catalyst component of any of claims 1-8,
wherein the magnesium element is derived from magnesium halide, preferably, the magnesium halide is at least one selected from magnesium fluoride, magnesium chloride, magnesium bromide and magnesium iodide, more preferably is magnesium chloride; and/or
the electron donor is at least one selected from ester compounds, ether compounds and ketone compounds; preferably, the electron donor is at least one selected from alkyl esters of C₁-C₄ saturated aliphatic carboxylic acids, alkyl esters of C₇-C₈ aromatic carboxylic acids, C₂-C₆ aliphatic ethers, C₃-C₄ cyclic ethers and C₃-C₆ saturated aliphatic ketones; more preferably, the electron donor is at least one selected from methyl formate, ethyl formate, isopropyl formate, n-propyl formate, methyl acetate, ethyl acetate, n-propyl acetate, isopropyl acetate, n-butyl acetate, isobutyl acetate, ethyl ether, propyl ether, hexyl ether, tetrahydrofuran, acetone and methyl isobutyl ketone.

10. The catalyst component of any of claims 1-9, wherein the inorganic oxide support is selected from silicon oxides and/or aluminum oxides, preferably is silicon dioxide; and/or,
the particle size of the inorganic oxide support is 0.01-10 µm, preferably 0.01-5 µm, more preferably is 0.1-1 µm, and/or,
a weight ratio of the inorganic oxide support to the organic silicon polymer is (1-100): 1, preferably is (2-80): 1.

11. The catalyst component of any of claims 1-10, wherein based on total weight 100 wt%, the catalyst component comprises:
0.1-5 wt% of titanium, measured in titanium element;
0.2-10.2 wt% of magnesium, measured in magnesium element;
15-40 wt% of electron donor;
0.01-15 wt% of organic silicon polymer; and
1-70 wt% of inorganic oxide support.

12. The catalyst component of claim 11, wherein Wbased on total weight 100 wt%, the catalyst component comprises:
0.5-4 wt% of titanium, measured in titanium element;
4-8 wt% of magnesium, measured in magnesium element;
20-35 wt% of electron donor;
0.1-10 wt% of organic silicon polymer; and
10-60 wt% of inorganic oxide support.

13. A method for preparing the catalyst component of any of claims 1-12, comprising the following steps:
step 1: mixing raw materials, comprising a titanium-containing compound, a magnesium halide, an electron donor, an organic silicon polymer and an inorganic oxide support, to obtain a slurry suspension;
step 2: carrying out spray drying, to obtain the catalyst component.

14. The preparation method of claim 13, wherein in the step 1, the titanium-containing compound, the magnesium halide and the electron donor are mixed first, to obtain a mother solution; the inorganic oxide support and the organic silicon polymer is added during or after the preparation process of the mother solution, to obtain the slurry suspension.

15. The preparation method of claim 13, wherein a molar ratio of the electron donor to the magnesium halide is (5.0-50):1, a mass ratio of the organic silicon polymer to the magnesium halide is (0.01-1.0):1, a molar ratio of the titanium-containing compound to the magnesium halide is (0.1-1.0):1, and a molar ratio of the inorganic oxide to the magnesium halide is (1.0-5.0):1.

16. The preparation method of any of claims 13-15, wherein the mixing in the step 1 is carried out at a temperature within a range of normal temperature to 85°C for 0.1 h or more, wherein the normal temperature is 25±5°C; and/or in the step 2, the spray drying is carried out under the following conditions: inlet temperature of 100-240°C and outlet temperature of 60-130°C.

17. A catalyst for olefin polymerization or copolymerization, comprising:
(A) the catalyst component of any of claims 1-12 or a catalyst component obtained with the preparation method of any of claims 13-16;
(B) an organo-aluminum compound represented by a general formula AlR_{b}X'_{3-b}, wherein R is hydrogen or C₁-C₂₀ alkyl; X' is halogen, preferably is chlorine, bromine or iodine; and 0 < b ≤ 3, preferably 1 < b ≤ 3.

18. The catalyst of claim 17, wherein the organo-aluminum compound is at least one selected from triethylaluminum, triisobutyl aluminum, tri-n-hexyl aluminum, tri-n-octyl aluminum and diethylaluminum chloride; and/or a molar ratio of the organo-aluminum compound to the catalyst component is (5-1,000):1, preferably (10-200):1.

19. An application of the catalyst of claim 17 or 18 in olefin polymerization, preferably in ethylene homopolymerization or copolymerization.
